# EUROPÄISCHE PATENTSCHRIFT

(11) **EP 2 837 313 B1**
(45) Veröffentlichungstag und Bekanntmachung des Hinweises auf die Patenterteilung: **14.09.2016**
(21) Anmeldenummer: 14178862.0
(22) Anmeldetag: 29.07.2014
(51) Int. Cl.: A47J 42/50

(54) **Kaffeevollautomat mit Geräuschdämmung**
Fully automatic coffee machine with sound insulation
Machine à café entièrement automatique insonorisée

(30) Priorität: 13.08.2013 DE 102013216037
(43) Veröffentlichungstag der Anmeldung: 18.02.2015
(73) Patentinhaber: BSH Hausgeräte GmbH, 81739 München (DE)
(72) Erfinder: Eder, Florian, 83132 Pittenhart (DE); Jäger, Harald, 83349 Palling (DE); Nöth, Christoph, 84558 Tyrlaching (DE)

(56) Entgegenhaltungen:
- EP-A1- 2 578 123
- EP-B1- 2 120 658
- WO-A1-01/23095

## Beschreibung

Die Erfindung betrifft einen Kaffeevollautomaten mit einem Bohnenbehälter mit einer im Betrieb in Richtung des Mahlwerks zeigenden Abgabeöffnung und mit einem Mahlwerk mit einer in Richtung der Abgabeöffnung des Bohnenbehälters zeigenden Befüllöffnung.

Kaffeevollautomaten verfügen regelmäßig über einen Bohnenbehälter, in dem ganze Bohnen für die Kaffeebereitung vorgehalten werden. Der Bohnenbehälter hat eine verschließbare Öffnung an seiner Oberseite zum Befüllen mit Bohnen und eine Abgabeöffnung zur Abgabe der Kaffeebohnen, die an der Unterseite des Bohnenbehälters angeordnet ist. Die Öffnung an der Oberseite des Bohnenbehälters ist meist mit einem Deckel verschlossen. So kann das Aroma der Bohnen, insbesondere bei längerer Lagerung im Bohnenbehälter, erhalten werden. Unterhalb der Abgabeöffnung des Bohnenbehälters ist das Mahlwerk angeordnet. Es weist auf seiner Oberseite eine Befüllöffnung auf. Bohnen können aus dem Bohnenbehälter durch die Befüllöffnung in das Mahlwerk hineinfallen. Gemäß der EP 2 120 658 B1 weist ein abnehmbarer Bohnenbehälter Verschlüsse auf, die den Bohnenbehälter im Bereich der Abgabeöffnung abschließen. Dieser Verschluss lässt sich zur Befüllung des Mahlwerks nach dem Einsetzen des Bohnenbehälters in den Kaffeevollautomaten manuell öffnen. Sobald der Nutzer des Kaffeevollautomaten die Zubereitung eines Kaffees auslöst, beginnt das Mahlwerk mit dem Mahlvorgang, um für den Brühvorgang frisch gemahlenen Kaffee zur Verfügung zu stellen. Dabei werden die. aus dem Bohnenbehälter in das Mahlwerk rutschenden Bohnen verarbeitet, wobei die Menge der Bohnen von der Menge des angeforderten Kaffees abhängt. Dazu ist aus der EP 2 578 123 A1 ein Kaffeeautomat mit zwei Bohnenbehältern bekannt, zwischen deren Ausgabeöffnungen und der Befüllöffnung des Mahlwerks ein Fördermittel angeordnet ist, welches als Dosiereinheit ausgebildet ist. Durch diese Dosiereinheit wird jeweils eine vorbestimmte Menge Bohnen zum Mahlwerk transportiert. Dabei verhindert die Dosiereinheit zusätzlich, dass weitere Bohnen aus einem der Behälter in die Befüllöffnung des Mahlwerks fallen.

Beim Betrieb derartiger Kaffeevollautomaten fallen sehr laute Geräusche beim Mahlen auf, die durch das Mahlwerk beim Brechen der Bohnen hervorgerufen werden. Diese Geräusche werden oft durch den trichterförmig gestalteten Bohnenbehälter noch verstärkt. Schalldämpfungselemente, wie z.B. schalldämpfende Deckel der Bohnenbehälter, erfüllen nur zum Teil den Zweck, die Lautstärke des Mahlwerks zu reduzieren. Es liegt jedoch im Interesse des Nutzers, die Geräusche des Mahlwerks deutlicher zu reduzieren, da zu laute Kaffeevollautomaten als störend empfunden werden.

Der vorliegenden Erfindung liegt daher die Aufgabe zugrunde, einen Kaffeevollautomaten zur Verfügung zu stellen, bei dem beim Mahlen entstehende Geräusche nicht durch den Bohnenbehälter u. U. sogar dort verstärkt nach außen dringen.

Diese Aufgabe wird bei dem eingangs genannten Kaffeevollautomaten erfindungsgemäß nach Anspruch 1 dadurch gelöst, dass ein Verschlusselement vorgesehen ist, welches in einer Ruhestellung des Mahlwerks als Ausgangsstellung die Befüllöffnung des Mahlwerks freigibt, und das in einer Betriebsstellung des Mahlwerks als Endstellung die Befüllöffnung abschließt. Entgegen der bisher bekannten Verschlüsse an der Abgabeöffnung des Bohnenbehälters, die während des Mahlvorgangs geöffnet sind, schließt dieser Verschluss das Mahlwerk nach oben zum Bohnenbehälter hin ab. Der Verschluss ist aktiviert, während das Mahlwerk arbeitet, so dass die Geräuschemissionen aus dem Mahlwerk in Richtung des Bohnenbehälters gering gehalten werden können. Verschlüsse nach dem Stand der Technik hingegen wurden nur dazu benötigt, Bohnen im Bohnenbehälter gegen ein Herausfallen nach der Entnahme des Bohnenbehälters aus dem Kaffeevollautomaten zu schützen.

In einer ersten Ausgestaltungsform der Erfindung kann das Verschlusselement separat, also manuell oder automatenseitig betätigbar sein, wobei verschiedene Ausführungsformen denkbar sind. So kann das Verschlusselement in einer einfachen Ausführung mit der Hand betätigbar sein. Dazu muss der Nutzer vor Beginn eines Kaffeezubereitungsvorgangs durch manuelles Betätigen des Verschlusselements das Mahlwerk an seiner Befüllöffnung verschließen. Alternativ ist ein mechanisch und/oder elektrisch betriebener Verschluss, beispielsweise ein vom Kaffeevollautomaten angesteuerter Magnetschalter denkbar, der im Zusammenhang mit dem Start eines Kaffeezubereitungsvorgangs den Verschluss der Befüllöffnung des Mahlwerks vornimmt.

In einer dazu alternativen Ausgestaltung des Kaffeevollautomaten kann ein Verschlusselement vorgesehen sein, das durch den Betrieb des Mahlwerks selbst aus der Ausgangsstellung in die Endstellung bewegt wird. Zum Beispiel eine mechanische oder elektromagnetische Koppelung zwischen dem Mahlwerk und dem Verschlusselement kann dafür sorgen, dass es aktiviert, die Befüllöffnung des Mahlwerks also geschlossen ist, sobald das Mahlwerk aktiviert wird. Eine mechanische oder elektromagnetische Anbindung kann zwischen einer Drehachse des Mahlwerks und dem Verschlusselement erfolgen.

In einer weiteren vorteilhaften Ausgestaltung des Kaffeevollautomaten ist eine Rutschkupplung als Antrieb des Verstellelements vorgesehen. Diese ist zwischen dem Verschlusselement und dem Mahlwerk angeordnet und wirkt derart, dass das Verschlusselement vor die Befüllöffnung bewegt wird, sobald der Mahlprozess beginnt. Beispielsweise kann die Rutschkupplung zwischen einer Förderschnecke, die die Bohnen in das Mahlwerk zwischen die Brechwerkzeuge zwingt, und dem Verschlusselement selbst angeordnet sein. Nach Abschluss des Mahlvorgangs und damit nach dem Ende der Drehbewegung des Mahlwerks ist das Verschlusselement wieder frei und kann in die Ausgangsstellung zurückgestellt werden. Dafür können wiederum manuelle, mechanische oder elektrische Antriebe eingesetzt werden.

Mit einer Koppelung des Verschlusselements an das Mahlwerk ist dessen Aktivierung während des Betriebs des Mahlwerks sichergestellt. Für ein erneutes Befüllen des Mahlwerks nach einem Mahl- und Brühvorgang kann ein manuelles Betätigen des Verschlusselements zum Öffnen des Bohnenbehälters erforderlich sein. In einer weiteren vorteilhaften Ausgestaltung des Kaffeevollautomaten kann das Verschlusselement ein Rückstellelement aufweisen, durch das das Verschlusselement nach Beendigung des Mahlvorgangs aus der Endstellung in die Ausgangsstellung bewegbar ist. Z.B. ein mechanisches Öffnen des Verschlusses durch den Nutzer oder ein automatisches Öffnen des Verschlusses durch einen elektrischen Vortrieb nach Ende des Mahlvorgangs gewährleistet, dass Bohnen für den folgenden Mahlvorgang verzugslos ins Mahlwerk einfallen können. So wird ein optimaler Betrieb des Kaffeevollautomaten erreicht, bei dem zugleich ein höchstmögliche Schallreduzierung für den Mahlbetrieb erfolgt, in dem das Mahlwerk immer nur dann durch das Verschlusselement verschlossen ist, wenn das Mahlwerk in Betrieb ist.

In einer weiteren vorteilhaften Ausgestaltung ist das Verschlusselement als Längsschieber ausgestaltet. Dieser ist flächig gehalten und kann quer zur Befüllrichtung aus dem Bohnenbehälter in das Mahlwerk in den Bohnenstrom eingeschoben werden. Der Längsschieber ist ein einfaches und damit kostengünstiges Bauteil, das auch keiner nennenswerten Wartung bedarf. Zudem ist ein solches Element selten reparaturbedürftig und ggf. leicht austauschbar.

Um den Bohnenstrom noch zuverlässiger zu unterbinden und gleichzeitig die Geräuschemission schnell zu mindern, kann nach einer weiteren vorteilhaften Ausgestaltung des erfindungsgemäßen Kaffeevollautomaten das Verschlusselement als Drehschieber ausgestaltet sein. Beispielsweise kann das Verschlusselement als Fotolinsenverschluss gestaltet sein. Bei einer Ausgestaltung als Drehverschluss wie bei einem Gewürzstreuer lassen sich Bereiche mit Öffnungen innerhalb von gegeneinander verdrehbaren Scheiben zur Deckung bringen, um einen Befüllvorgang zu ermöglichen. Sobald der Mahlvorgang beginnt, werden die Scheiben gegeneinander gedreht und schließen gegenseitig die Bereiche mit den Öffnungen ab. Bei Drehverschlüssen ist im Allgemeinen die Tendenz geringer, Bohnen einzuklemmen. Aus Platzgründen können die beispielhaft genannten Drehschieberarten 3-dimensional bzw. kalottenförmig ausgestaltet sein.

In einer weiteren vorteilhaften Ausgestaltung des erfindungsgemäßen Kaffeevollautomaten ist das Rückstellelement als Federmechanismus oder schwerkraftgetrieben ausgestaltet. Bei der Ausgestaltung des Rückstellelements als Federmechanismus ist zwischen einem Gehäuse des Kaffeevollautomaten und dem Verschlusselement eine Feder angeordnet, die das Verschlusselement nach Beendigung des Mahlvorgangs aus der Endstellung in die Ausgangsstellung zurück bewegt. Die Feder kann auf verschiedene Arten angeordnet sein. Dabei können Zug- und Druckfedern zum Einsatz kommen, wobei doppelte Evolutfedern als besonders robuste Ausführungsform von Vorteil sein können. Aber auch Schenkel- oder Spiralfedern sind denkbar. Bei Nutzung von Gewichten als Rückstellelement sind diese derart angeordnet, dass das Verschlusselement durch die auf das Gewicht wirkende Schwerkraft in die Ausgangsposition zurückgestellt wird, wobei zum Beispiel aus Platzgründen eine oder mehrere Umlenkungen der Verbindung zwischen dem Verschlusselement und dem Gewicht erforderlich sein können.

Abnehmbare Bohnenbehälter bieten sich wegen ihrer einfacheren Befüllung an. Sie erfordern eine verschließbare Abgabeöffnung, die jedenfalls zum Befüllen des Mahlwerks geöffnet werden kann. Sie lassen sich auf den erfindungsgemäßen Kaffeevollautomaten aufsetzen. An der Schnittstelle zwischen dem Bohnenbehälter und dem Mahlwerk befinden sich dann zwei Verschlüsse, nämlich der der Abgabeöffnung des Bohnenbehälters einerseits und der erfindungsgemäße der Befüllöffnung des Mahlwerks andererseits. Nach einer besonders vorteilhaften Ausgestaltung des erfindungsgemäßen Kaffeevollautomaten kann das Verschlusselement am abnehmbaren Bohnenbehälter angeordnet sein und ein deaktivierbares Rückstellelement aufweisen. Zur Abnahme des Bohnenbehälters ist das Rückstellelement zu deaktivieren, damit das Verschlusselement die Abgabeöffnung des abgenommenen Bohnenbehälters gegen Herausfallen von Bohnen abschließt. Beim Einsetzen des Bohnenbehälters in oder auf den Kaffeevollautomaten wird das Rückstellelement aktiviert. Das Verschlusselement gibt daraufhin das Mahlwerk frei, weil es durch das Rückstellelement in seine Ausgangsposition überführt wird. Bohnen können in das Mahlwerk hinein fallen. Beim Starten des Mahlvorgangs wird das Verschlusselement wie oben beschrieben erneut bewegt, diesmal in seine Endstellung.

Um das Verschlusselement sowohl als Verschluss der Abgabeöffnung des Bohnenbehälters als auch als Verschluss der Befüllöffnung des Mahlwerks nutzen zu können, muss das Rückstellelement für den Fall der Entnahme des Bohnenbehälters deaktivierbar sein, das Verschlusselement also ohne Betrieb des Mahlwerks in seine Endstellung verbracht werden. Dazu kann z.B. ein handbetätigter Verschluss des Bohnenbehälters als Deaktivierung in Betracht kommen. Nach einer weiteren vorteilhaften Ausgestaltung der Erfindung kann die Deaktivierung des Rückstellelements bzw. das Verbringen des Verschlusselements in seine Endstellung durch die Abnahmebewegung des Bohnenbehälters vom Kaffeevollautomaten erfolgen. Der abnehmbare Bohnenbehälter kann beispielsweise durch einen Bajonettverschluss am Kaffeevollautomaten gekoppelt sein. Zur (Ent-) Koppelung ist sowohl eine translatorische vertikale Aufsetz- oder Abnahmebewegung als auch eine horizontale rotatorische Bewegung erforderlich. Sie können dazu genutzt werden, eine mechanische (De-) Aktivierung des Rückstellelements und/oder des Verschlusselements auszulösen. Damit kann eine Betätigung durch den Benutzer entfallen und die Zuverlässigkeit der Funktionen des Kaffeevollautomaten gesteigert werden, was einer komfortablen Bedienung des Kaffeevollautomaten dient.

Das Prinzip der Erfindung wird im Folgenden anhand von Zeichnungen beispielshalber noch näher erläutert. In der Zeichnung zeigen:
Figur 1: das Verschlusselement in der Zusammenwirkung mit Mahlwerk und Bohnenbehälter zu Beginn des Mahlvorgangs,
Figur 2: das Verschlusselement in der Zusammenwirkung mit Mahlwerk und Bohnenbehälter während des Mahlvorgangs und
Figur 3: das Verschlusselement in der Zusammenwirkung mit Mahlwerk und Bohnenbehälter nach Beendigung des Mahlvorgangs.

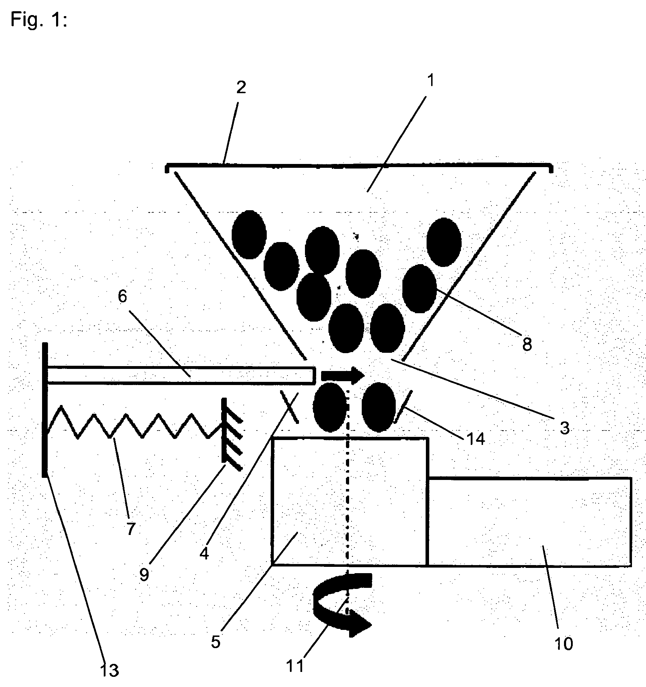

Fig. 1 zeigt die erfindungswesentlichen Elemente des erfindungsgemäßen Kaffeevollautomaten in einer schematischen Darstellung zu Beginn des Mahlvorgangs. Ein Bohnenbehälter 1 ist mit einem Deckel 2 versehen, der eine Öffnung zum Befüllen des Bohnenbehälters 1 mit Kaffeebohnen verschließt und dem Aromaschutz dient. An einer Unterseite des Bohnenbehälters 1 und dem Deckel 2 gegenüber liegt eine Abgabeöffnung 3, durch die Kaffeebohnen in ein Mahlwerk 5 gelangen können. Unterhalb der Abgabeöffnung 3 ist das Mahlwerk 5 angeordnet, das über eine in Richtung der Abgabeöffnung 3 zeigende Befüllöffnung 4 verfügt. Die Befüllöffnung 4 ist derart gestaltet, dass Bohnen 8 aus dem Bohnenbehälter 1 in das Mahlwerk 5 einfallen können. Dies erleichtert ein Trichter 14. Zwischen dem Bohnenbehälter 1 und dem Mahlwerk 5 ist ein Verschlusselement 6 eingefügt, das in Aktion die Befüllöffnung 4 des Mahlwerks 5 in Richtung der Abgabeöffnung 3 verschließt. Das Mahlwerk 5 verfügt über einen Pulverabgabeschacht 10. In der Figur 1 ist das Verschlusselement 6 als waagerecht verschiebbares, flächiges Element bzw. als Längsschieber ausgeführt. Es kann aus der dargestellten Ausgangs- oder Ruhestellung, in der es inaktiv ist, von einer Seite aus in den Bohnenstrom aus dem Bohnenbehälter 1 in das darunter angeordnete Mahlwerk 5 eingefahren werden, um seine Endstellung zu erreichen. An der dem Mahlwerk 5 abgewandten Seite des Verschlusselements 6 ist eine Verschlusselementbasis 13 vorgesehen, an der ein Rückstellelement 7 in Form einer Druckfeder angeordnet ist. Es ist zwischen dem Gehäuse 9 und der Verschlusselementbasis 13 angeordnet und spannt das Verschlusselement 6 in seiner Ausgangsstellung vor. Für den Fall, dass keine Kraft mehr das Verschlusselement 6 in seiner Endstellung hält, stellt sie das Verschlusselement 6 in seine Ausgangsstellung zurück.

Sobald das Mahlwerk 5 in Betrieb genommen wird, wird eine Drehbewegung um die Drehachse 11 erzeugt, welche auf eine nicht näher dargestellte Rutschkupplung übertragen wird. Die Rutschkupplung wirkt zwischen dem Verschlusselement 6 und dem Mahlwerk 5 und dort an einem dem Verschlusselement 6 zugewandten Ende, beispielsweise der Förderschnecke. Sie sorgt dafür, dass das Verschlusselement 6 in der angedeuteten Pfeilrichtung über die Befüllöffnung des Mahlwerks 5 in seine Endstellung verbracht wird. Dabei wird das Rückstellelement 7 gestaucht.

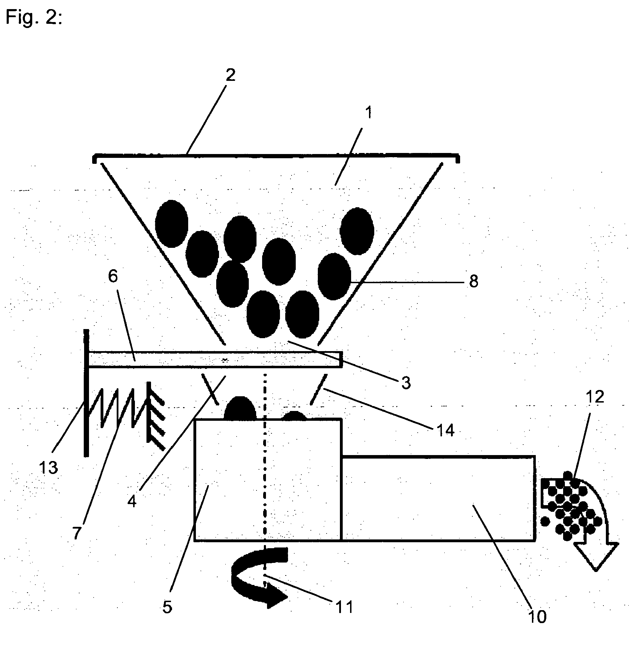

In Fig. 2 ist das Verschlusselement 6 zwischen die Abgabeöffnung 3 des Bohnenbehälters 1 und die Befüllöffnung 4 des Mahlwerks 5 verbracht. Es befindet sich in seiner Endstellung. Durch Verschieben des Verschlusselements 6 ist auch die Verschlusselementbasis 13 verschoben worden, so dass das zwischen Verschlusselementbasis 13 und dem Gehäuse 9 angeordnete Rückstellelement 7 gestaucht ist. Die Drehbewegung beim Betrieb des Mahlwerks 5 um die Drehachse 11 aktiviert die Rutschkupplung und erzeugt eine ausreichende Kraft, die entgegen der Federkraft des Rückstellelements 7 das Verschlusselement 6 über die Rutschkupplung in der Endstellung hält. Das durch den Mahlprozess im Mahlwerk 5 aus den Bohnen 8 entstehende Kaffeepulver 12 wird durch den Pulverabgabeschacht 10 aus dem Mahlwerk 5 abgegeben.

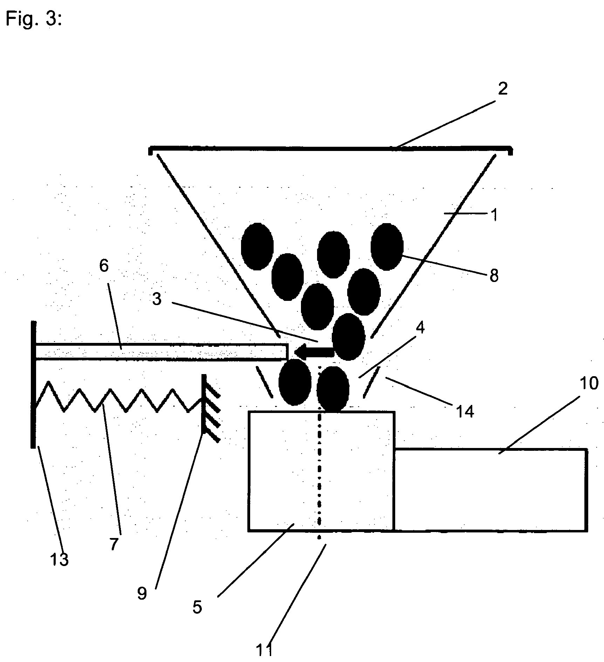

In Fig. 3 wird ein Zustand gezeigt, der nach dem Ende des Mahlvorgangs eintritt. Das Ende der Drehbewegung um die Drehachse 11 des Mahlwerks 5 sorgt dafür, dass die nicht näher dargestellte Rutschkupplung keine Kraft mehr auf das Verschlusselement 6 und entgegen der Federkraft des Rückstellelements 7 ausübt. Dadurch kann das Rückstellelement 7 wieder seine ursprüngliche Form annehmen und durch Wirken der Rückstellkraft auf die Verschlusselementbasis 13 das Verschlusselement 6 in seine Ausgangsstellung befördern. Durch Einnehmen der Ausgangsstellung des Verschlusselements 6 werden die Befüllöffnung 4 des Mahlwerks 5 und die Abgabeöffnung 3 des Bohnenbehälters 1 freigegeben. So können Bohnen 8 erneut für den kommenden Mahlvorgang in das Mahlwerk 5 hinein fallen.

Da es sich bei dem vorhergehenden, detailliert beschriebenen Kaffeevollautomaten um ein Ausführungsbeispiel handelt, kann er in üblicher Weise vom Fachmann in einem weiten Umfang modifiziert werden, ohne den Bereich der Erfindung zu verlassen. Insbesondere können die Gestaltung und das Prinzip des Verschlusselements geändert werden. Ebenso kann die Ausgestaltung des Rückstellelements und dessen Zusammenwirken mit dem Verschlusselement in einer anderen Form vorgenommen werden, wenn dies z.B. aus designerischen oder Platzgründen notwendig ist. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Bohnenbehälter
- 2: Deckel
- 3: Abgabeöffnung
- 4: Befüllöffnung
- 5: Mahlwerk
- 6: Verschlusselement
- 7: Rückstellelement
- 8: Bohnen
- 9: Gehäuse
- 10: Pulverabgabeschacht
- 11: Drehachse
- 12: Pulver
- 13: Verschlusselementbasis
- 14: Trichter

## Patentansprüche

1. Kaffeevollautomat mit einem Bohnenbehälter (1) mit einer im Betrieb in Richtung eines Mahlwerks (5) zeigenden Abgabeöffnung (3), einem Mahlwerk (5) mit einer in Richtung der Abgabeöffnung (3) des Bohnenbehälters (1) zeigenden Befüllöffnung (4) und einem Verschlusselement (6), **dadurch gekennzeichnet, dass** das Verschlusselement (6) in einer Ruhestellung des Mahlwerks (5) als Ausgangsstellung die Befüllöffnung (4) des Mahlwerks (5) freigibt und in einer Betriebsstellung des Mahlwerks (5) als Endstellung die Befüllöffnung (4) abschließt.

2. Kaffeevollautomat nach Anspruch 1, **dadurch gekennzeichnet, dass** das Verschlusselement (6) separat betätigbar ist.

3. Kaffeevollautomat nach Anspruch 1, **dadurch gekennzeichnet, dass** das Verschlusselement (6) durch den Betrieb des Mahlwerks (5) aus der Ausgangsstellung in die Endstellung bewegbar ist.

4. Kaffeevollautomat nach dem obigen Anspruch, **gekennzeichnet durch** eine Rutschkupplung als Antrieb des Verschlusselements (6), die zwischen dem Verschlusselement (6) und dem Mahlwerk (5) angeordnet ist.

5. Kaffeevollautomat nach einem der obigen Ansprüche, **dadurch gekennzeichnet, dass** das Verschlusselement (6) ein Rückstellelement (7) aufweist, durch das das Verschlusselement (6) aus der Endstellung in die Ausgangsstellung bewegbar ist.

6. Kaffeevollautomat nach einem der obigen Ansprüche, **dadurch gekennzeichnet, dass** das Verschlusselement (6) als Längsschieber ausgestaltet ist.

7. Kaffeevollautomat nach einem der Ansprüche 1 bis 5, **dadurch gekennzeichnet, dass** das Verschlusselement (6) als Drehschieber ausgestaltet ist.

8. Kaffeevollautomat nach einem der Ansprüche 4 bis 7, **gekennzeichnet durch** einen Federmechanismus oder ein Gewicht als Rückstellelement (7).

9. Kaffeevollautomat nach einem der Ansprüche 4 bis 8, **dadurch gekennzeichnet, dass** das Verschlusselement (6) an einem abnehmbaren Bohnenbehälter (1) angeordnet ist und ein deaktivierbares Rückstellelement (7) aufweist.

10. Kaffeevollautomat nach einem der Ansprüche 4 bis 8, **dadurch gekennzeichnet, dass** die Deaktivierung des Rückstellelements und/oder das Verbringen des Verschlusselement in seine Endstellung durch die Abnahmebewegung des Bohnenbehälters vom Kaffeevollautomaten erfolgt

## Claims

1. Fully automatic coffee machine having a bean container (1) with a discharge opening (3) pointing towards a grinder (5) in operation, a grinder (5) with a fill opening (4) pointing towards the discharge opening (3) of the bean container (1), and a closure element (6), **characterised in that** the closure element (6) releases the fill opening (4) of the grinder (5) in an inoperative position of the grinder (5) as an initial position and closes the fill opening (4) in an operating position of the grinder (5) as a final position.

2. Fully automatic coffee machine according to claim 1, **characterised in that** the closure element (6) can be actuated separately.

3. Fully automatic coffee machine according to claim 1, **characterised in that** the closure element (6) can be moved from the initial position into the final position by the operation of the grinder (5).

4. Fully automatic coffee machine according to the above claim, **characterised by** a friction coupling as a drive of the closure element (6) which is arranged between the closure element (6) and the grinder (5).

5. Fully automatic coffee machine according to one of the above claims, **characterised in that** the closure element (6) has a reset element (7) by which the closure element (6) can be moved from the final position into the initial position.

6. Fully automatic coffee machine according to one of the above claims, **characterised in that** the closure element (6) is configured as a longitudinal slide.

7. Fully automatic coffee machine according to one of claims 1 to 5, **characterised in that** the closure element (6) is configured as a rotary slide.

8. Fully automatic coffee machine according to one of claims 4 to 7, **characterised by** a spring mechanism or a weight as a reset element (7).

9. Fully automatic coffee machine according to one of claims 4 to 8, **characterised in that** the closure element (6) is arranged on a removable bean container (1) and has a deactivatable reset element (7).

10. Fully automatic coffee machine according to one of claims 4 to 8, **characterised in that** the deactivation of the reset element and/or the introduction of the closure element into its final position is effected by the movement of removing the bean container from the fully automatic coffee machine.

## Revendications

1. Machine à café entièrement automatique comprenant un récipient à grains (1) pourvu d'une ouverture de distribution (3) dirigée, lors du fonctionnement, vers un mécanisme de broyage (5), un mécanisme de broyage (5) pourvu d'une ouverture de remplissage (4) dirigée vers l'ouverture de distribution (3) du récipient à grains (1), et un élément de fermeture (6), **caractérisée en ce que** l'élément de fermeture (6), en position initiale, libère l'ouverture de remplissage (4) du mécanisme de broyage (5), dans une position de repos du mécanisme de broyage (5), et, en position finale, ferme l'ouverture de remplissage (4), dans une position de fonctionnement du mécanisme de broyage (5).

2. Machine à café entièrement automatique selon la revendication 1, **caractérisée en ce que** l'élément de fermeture (6) peut être actionné séparément.

3. Machine à café entièrement automatique selon la revendication 1, **caractérisée en ce que** le fonctionnement du mécanisme de broyage (5) peut provoquer le déplacement de l'élément de fermeture (6) de la position initiale dans la position finale.

4. Machine à café entièrement automatique selon la revendication ci-dessus, **caractérisée par** un accouplement à glissement en tant qu'entraînement de l'élément de fermeture (6), lequel accouplement est situé entre l'élément de fermeture (6) et le mécanisme de broyage (5).

5. Machine à café entièrement automatique selon l'une des revendications précédentes, **caractérisée en ce que** l'élément de fermeture (6) comprend un élément de rappel (7) grâce auquel l'élément de fermeture (6) peut être déplacé de la position finale dans la position initiale.

6. Machine à café entièrement automatique selon l'une des revendications précédentes, **caractérisée en ce que** l'élément de fermeture (6) est exécuté en tant que coulisse longitudinale.

7. Machine à café entièrement automatique selon l'une des revendications 1 à 5, **caractérisée en ce que** l'élément de fermeture (6) est exécuté en tant que coulisse rotative.

8. Machine à café entièrement automatique selon l'une des revendications 4 à 7, **caractérisée par** un mécanisme à ressort ou un poids en tant qu'élément de rappel (7).

9. Machine à café entièrement automatique selon l'une des revendications 4 à 8, **caractérisée en ce que** l'élément de fermeture (6) est situé au niveau d'un récipient à grains (1) amovible et comprend un élément de rappel (7) pouvant être désactivé.

10. Machine à café entièrement automatique selon l'une des revendications 4 à 8, **caractérisée en ce que** la désactivation de l'élément de rappel et/ou le déplacement de l'élément de fermeture dans sa position finale peut/peuvent se produire sous l'effet du mouvement de retrait du récipient à grains de la machine à café entièrement automatique.
